Europäisches Patentamt

(19) European Patent Office

Office européen des brevets

(11) Veröffentlichungsnummer: **0 010 763**
**B1**

(12) # EUROPÄISCHE PATENTSCHRIFT

(45) Veröffentlichungstag der Patentschrift:
14.10.81

(21) Anmeldenummer: 79104263.3

(22) Anmeldetag: 02.11.79

(51) Int. Cl.³: **E 06 B  3/08**, E 05 D  5/02,
E 06 B  7/23, E 06 B  3/62,
E 06 B  1/60, H 02 B  1/08

(54) Rahmenprofil für Fenster- und Türrahmen bzw. für aufsetzbare Bedienungsfelder od. dgl. von Schalt- oder Verteilerschränken und dgl.

(30) Priorität: 06.11.78  DE 2847994

(43) Veröffentlichungstag der Anmeldung:
14.05.80 Patentblatt 80/10

(45) Bekanntmachung des Hinweises auf die Patenterteilung:
14.10.81 Patentblatt 81/41

(84) Benannte Vertragsstaaten:
AT BE CH FR GB IT NL SE

(56) Entgegenhaltungen:
BE-A-863 778
CH-A-355 926
DE-A-2 110 064
DE-A-2 406 943
DE-B-1 100 917
GB-A-872 870
US-A-3 629 972

(73) Patentinhaber: Rittal-Werk Rudolf Loh GmbH & Co. KG,
Auf dem Stützelberg, D-6348 Herborn (DE)

(72) Erfinder: Lehr, Lothar, Dresseindorfer Strasse 16,
D-5905 Burbach-Oberdresseindorf (DE)
Erfinder: Debus, Jürgen, D-6344 Dietzhölztal 2 (DE)

(74) Vertreter: Vogel, Georg, Auenweg 14,
D-7141 Schwieberdingen (DE)

## Rahmenprofil für Fenster- und Türrahmen bzw. für aufsetzbare Bedienungsfelder oder dgl. von Schalt- oder Verteilerschränken und dgl.

Die Erfindung betrifft ein Rahmenprofil für Fenster- und Türrahmen bzw. für aufsetzbare Bedienungsfelder oder dgl. von Schalt- oder Verteilerschränken und dgl., bei dem ein Hohlprofilteil durch eine Außenwand, eine Innenwand, eine Vorderwand und eine Rückwand gebildet ist.

Rahmenprofile mit einem aus mehreren Wandteilen gebildeten Hohlprofilteil sind im Schalt- oder Verteilerschrankbau bereits bekannt, wie die DE-A-1 753 038 zeigt. Diese Rahmenprofile bilden das Kantengerüst für den Schaltschrank, an dem die Wandplatten festgemacht werden.

Ein derartiges Rahmenprofil ist für die Herstellung von Fenster- oder Türrahmen für Schalt- oder Verteilerschränke nur bedingt geeignet, da an ein Rahmenprofil für einen derartigen Einsatz weit mehr Anforderungen gestellt werden. Es sei nur an die Abdichtung zwischen Fenster oder Tür und dem Schrank, sowie an eine einfache Möglichkeit zur Anlenkung des Fensters oder der Tür hingewiesen.

Es ist Aufgabe der Erfindung, ein Rahmenprofil der eingangs erwähnten Art zu schaffen, das zum Aufbau von Fenster- und Türrahmen bzw. von aufsetzbaren Bedienungsfeldern geeignet ist, die gegen eine glatte Fläche des Schrankes bzw. einen abgewinkelten Schließsteg der Öffnung im Schrank abdichtbar sind und die auf einfache Weise fest oder gelenkig mit dem Schrank verbunden werden können.

Dies wird erfindungsgemäß dadurch gelöst, daß die Vorderwand und die Rückwand senkrecht zur Außenwand stehen, während die Innenwand leicht geneigt ist, so daß sich der Hohlprofilteil zur Vorderwand hin verjüngt, daß die Außenwand über die Rückwand hinaus verlängert ist, wobei in diesem Verlängerungssteg auf der Innenseite eine hinterschnittene Aufnahmenut für Scharnierteile oder Befestigungsblöcke ausgebildet ist, daß die Rückwand auf ihrer Außenseite als Aufnahmenut für einen Dichtungsstreifen ausgelegt ist und daß die Innenwand im Anschluß an die Vorderwand eine eingelassene Aufnahmenut für eine Abschlußscheibe aufweist und über die Rückwand hinaus verlängert ist, wobei der Verlängerungssteg stirnseitig einen Aufnahmeschlitz für eine Dichtungslippe aufweist. Der aus diesem Profilrahmen gefertigte Rahmen kann eine Abschlußscheibe aufnehmen und über die Scharnierteile oder Befestigungsblöcke leicht gelenkig oder fest mit dem Schrank verbunden werden. Je nach Einsatz eines Dichtungsstreifens oder einer Dichtungslippe kann der so gebildete Profilrahmen gegen einen abgewinkelten Schließsteg an der Öffnung des Schrankes oder gegen die glatte Vorderwand des Schrankes abgedichtet werden.

Mit dem erfindungsgemäßen Rahmenprofil lassen sich auch aufsetzbare Bedienungsfelder herstellen, wenn vorgesehen ist, daß auf der Außenseite des Verlängerungssteges der Innenwand ein Befestigungssteg angeformt ist, der parallel zur Vorder- und Rückwand ausgerichtet ist und daß die Aufnahmenut für eine Abschlußplatte in der Innenwand entfällt. Mit dem Befestigungssteg kann eine Trägerplatte verbunden werden, die gegenüber der Vorderwand des Profilrahmens zurückgesetzt ist und die Bedienungselemente Trägt. Dabei ist vorzugsweise vorgesehen, daß dieser Befestigungssteg bündig mit dem Verlängerungssteg der Innenwand abschließt.

Eine unverlierbare Führung der Scharnierteile in der Aufnahmenut wird nach einer Ausgestaltung dadurch erhalten, daß die hinterschnittene Aufnahmenut auf der Innenseite des Verlängerungsssteges der Außenwand durch eine L-förmige Endabwinkelung des Verlängerungssteges und einem zur Außenseite der Rückwand stehenden, im Abstand zum Verlängerungssteg angeordneten Haltesteg gebildet ist. Dabei kann zusätzlich vorgesehen sein, daß dieser Haltesteg einseitig die Aufnahmenut für den Dichtungsstreifen begrenzt und daß die andere Seite der Aufnahmenut durch einen verdickten Endbereich der Rückwand, der in die Innenwand übergeht, gebildet ist.

Eine Aufnahme für die Abschlußscheibe wird nach einer Ausgestaltung dadurch im erfindungsgemäßen Rahmenprofil erhalten, daß die Aufnahmenut für die Abschlußscheibe durch einen Teil der Vorderwand, einen parallel zur Außenwand verlaufenden Nutsteg und einen parallel zur Vorderwand verlaufenden Nutsteg gebildet ist, wobei der letztgenannte Nutsteg in die Innenwand übergeht. Ist bei einem Sichtfenster die Abschlußscheibe aus Glas, dann ist die Ausbildung vorzugsweise so, daß die Abschlußscheibe über ein im Querschnitt U-förmiges Dichtungsprofil in der Aufnahmenut der Innenwand festgelegt ist.

Die Festlegung der Dichtungslippe bei einer Abdichtung zu einer Fläche des Schrankes wird dadurch sichergestellt, daß der Verlängerungssteg der Innenwand durch den Aufnahmeschlitz für die Dichtungslippe, der senkrecht zur Rückwand gerichtet ist, in zwei Haltestege unterteilt ist, zwischen denen der Raststeg der Dichtungslippe festklemmbar ist.

Nach einer weiteren Ausgestaltung ist vorgesehen, daß die Verlängerungsstege der Außen- und der Innenwand in einer zur Rückwand parallelen Ebene enden. Dies erleichtert die feste Verbindung eines Profilrahmens mit einer Schrankfläche.

Um die Verletzungsgefahr an einem aus dem erfindungsgemäßen Rahmenprofil hergestellten Profilrahmen zu reduzieren, sieht eine Ausgestaltung vor, daß die Kante zwischen der Vorderwand und der Außenwand, die Kante zwischen der Vorderwand und der Innenwand und die Kante zwischen dem Verlängerungssteg der Außenwand und der L-förmigen Endabwinkelung des Verlängerungssteges abgerundet sind.

Für die Anlenkung eines Profilrahmens ist die Ausgestaltung vorzugsweise so, daß in der Aufnahmenut des Verlängerungssteges der Außenwand als Gleitsteine ausgebildete Scharnierteile axial verstellbar, jedoch unverdrehbar geführt sind, die im Querschnitt an den Querschnitt der Aufnahmenut angepaßt sind und an denen ein Scharnierauge mit einer Bohrung für einen Scharnierstift angeformt ist. Die bei dem Zusammenbau eines Profilrahmens in das zugeordnete Rahmenprofilabschnitt eingeschobenen Scharnierteile sind dann unverlierbar am Profilrahmen gehalten, sie können jedoch an diesem Rahmenprofilabschnitt beliebig in Längsrichtung verstellt und auf die Stellungen der Gegenscharnierteile am Schrank eingestellt werden. Die Ausbildung ist dabei so, daß die Scharnieraugen in den Bereichen zwischen den beiden Verlängerungsstegen der Außen- und der Innenwand ragen und vorzugsweise außerhalb der Aufnahme für den Dichtungsstreifen angeordnet sind.

Für die vollständige gelenkige Verbindung ist nach einer Weiterbildung vorgesehen, daß die Scharnierteile mit Gegenscharnierteilen verbindbar sind, die mit der Schrankwand bzw. einem abgewinkelten Schließsteg im Bereich der Schranköffnung angebracht sind.

Die nachträgliche Festlegung eines aus dem erfindungsgemäßen Rahmenprofil hergestellten Profilrahmens wird dadurch ermöglicht, daß in die Aufnahmenut des Verlängerungssteges der Außenwand Befestigungsblöcke quer zur Längsrichtung einfahrbar sind, daß diese Befestigungsblöcke begrenzt quer zur Aufnahmenut verstellbar sind und daß die Befestigungsblöcke mittels Spannschrauben, die in eine Gewindebohrung derselben einschraubbar und gegen die Außenseite der Rückwand verspannbar sind, unverlierbar und unverschiebbar in der Aufnahmenut festlegbar sind. Die Befestigungsblöcke können in die Aufnahmenut des fertigen Profilrahmens nachträglich eingebracht und mit den Spannschrauben in den Aufnahmenuten unverlierbar festgelegt werden.

Nach einer Ausgestaltung ist vorgesehen, daß die Spannschrauben auf der der Rückwand abgekehrten Seite an den Befestigungsblöcken vorstehen und mit diesen vorstehenden Teilen und Muttern an der Schrankwand festlegbar sind. Zur Festlegung des Profilrahmens an dem Schrank werden dann keine besonderen Schrauben mehr benötigt.

Die Erfindung wird anhand von verschiedenen, in den Zeichnungen dargestellten Ausführungsbeispielen näher erläutert. Es zeigt

Fig. 1 im Schnitt ein erstes Ausführungsbeispiel eines Rahmenprofils, das Scharnierteile aufnimmt und mittels Gegenscharnierteilen an einer Schrankwand angelenkt ist, sowie eine Dichtungslippe in dem Aufnahmeschlitz des Verlängerungssteges der Innenwand trägt,

Fig. 2 im Schnitt ein zweites Ausführungsbeispiel eines Rahmenprofils, das Scharnierteile aufnimmt und mittels Gegenscharnierteile an dem der Schließsteg der Öffnung des Schrankes angelenkt ist, sowie einen Dichtungsstreifen für diesen Schließsteg trägt,

Fig. 3 einen Schnitt durch das Gegenscharnierteil beim Ausführungsbeispiel nach Fig. 1,

Fig. 4 die Seitenansicht des Gegenscharnierteiles nach Fig. 3,

Fig. 5 die Ansicht auf die Stirnseite des bei den Ausführungsbeispielen nach Fig. 1 und 2 verwendeten Scharnierteils,

Fig. 6 die Seitenansicht des Scharnierteiles nach Fig. 5 und

Fig. 7 im Schnitt ein drittes Ausführungsbeispiel eines Rahmenprofils, das Befestigungsblöcke aufnimmt, die direkt mit der Schrankwand verbindbar sind, und das eine Dichtungslippe trägt.

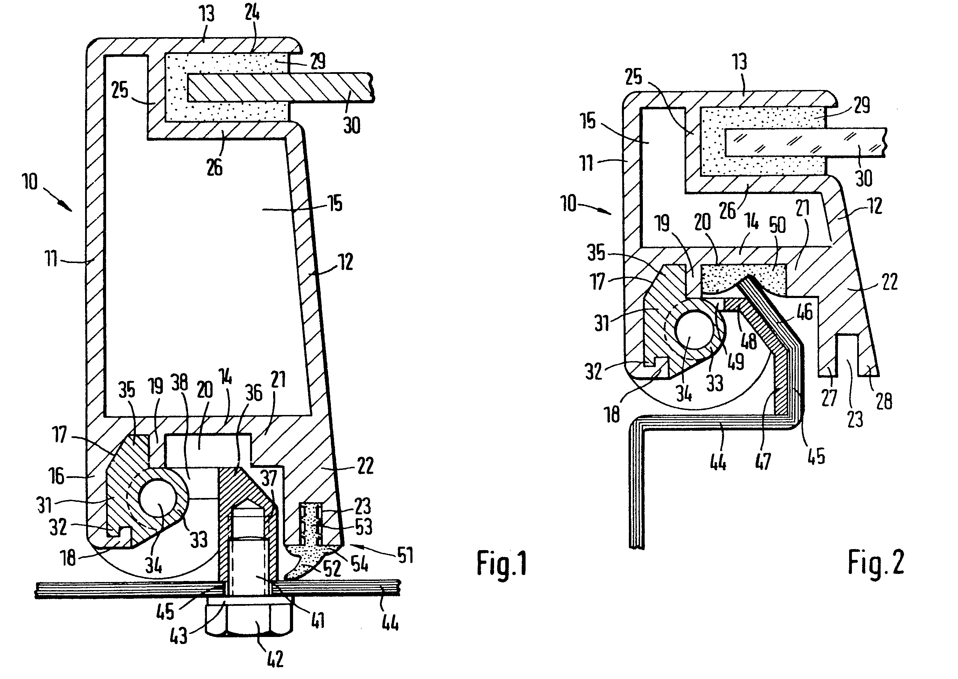

Das Rahmenprofil nach Fig. 1 bildet ein Hohlprofil 10, das aus der Außenwand 11, der Innenwand 12, der Vorderwand 13 und der Rückwand 14 besteht. Auf Gehrung geschnittene Abstände dieses Rahmenprofils werden zu einem Profilrahmen zusammengesetzt, wobei in den Eckbereichen an sich bekannte Eckverbinder in das Hohlprofilteil 10 eingesetzt werden, die die Rahmenprofilabschnitte gegeneinander verspannen und festhalten.

Die Vorderwand 13 und die Rückwand 14 stehen senkrecht zur Außenwand 11, wobei die Kanten abgerundet sind. Die Innenwand 12 ist leicht geneigt, so daß sich das Rahmenprofil zur Vorderwand 13 hin verjüngt.

Die Außenwand 11 ist über die Rückwand 14 hinaus verlängert. Dieser Verlängerungssteg 16 bildet auf seiner Innenseite eine hinterschnittene Aufnahmenut 17, die durch die L-förmige Endabwinkelung 18 und den im Abstand von dem Verlängerungssteg 16 angeordneten und senkrecht zur Außenseite der Rückwand 14 stehenden Haltesteg 19 begrenzt wird.

Die Rückwand 14 ist im Übergangsbereich zur Innenwand 12 verdickt und bildet mit dem verdickten Endbereich 21 eine Aufnahme 20 für einen Dichtungsstreifen 50 (Fig. 2).

Die Innenwand 11 weist im Anschluß an die Vorderwand 13 eine eingelassene Aufnahmenut 24 auf, die eine Abschlußscheibe 30 mit einem im Querschnitt U-förmigen Dichtungsprofil 29 aufnimmt. Die Aufnahmenut 24 wird durch einen Teil der Vorderwand 13, einen parallel zur Vorderwand 13 verlaufenden Steg 26 gebildet, wobei letzterer in die Innenwand 11 übergeht.

Die Innenwand 12 ist über die Rückwand 14 hinaus verlängert. Der Verlängerungssteg 22 weist stirnseitig einen Aufnahmeschlitz 23 auf, der den Verlängerungssteg 22 in die Haltestege 27 und 28 unterteilt. Zwischen diese Haltestege 27 und 28 wird der Raststeg 53 einer Dichtungslippe 51 festgeklemmt, die mit dem breiteren Teil 54 an dem Verlängerungssteg 22 anliegt und mit der Lippe 52 vorsteht.

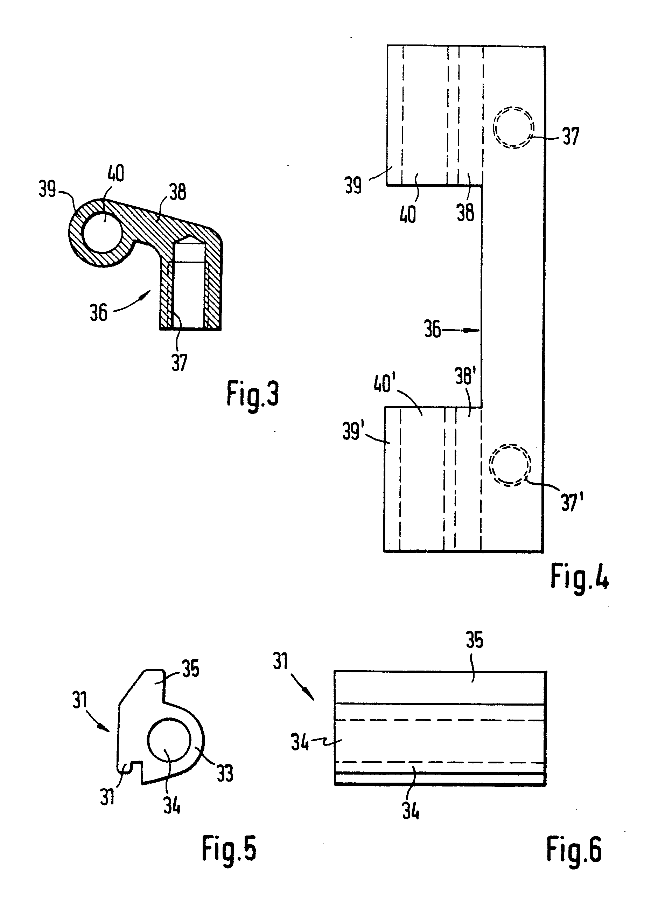

Soll ein aus dem erfindungsgemäßen Rahmenprofil zusammengesetzter Profilrahmen an einer Schrankwand 44 angelenkt werden, dann werden vor dem Zusammensetzen des Profilrahmens bei dem betreffenden Rahmenprofilabschnitt Scharnierteile 31 in die Aufnahmenut 17 eingeschoben. Diese als Gleitsteine ausgebildeten Scharnierteile 31 nach Fig. 5 und 6 sind im Querschnitt auf den Querschnitt der Aufnahmenut 17 ausgelegt, wie die Teile 32 und 35 zeigen, so daß sie axial verschiebbar, jedoch unverdrehbar in der Aufnahmenut 17 geführt sind. An diese Gleitsteine sind Scharnieraugen 33 mit einer Bohrung 34 für einen Scharnierstift angeformt, die vorzugsweise in den Raum zwischen den beiden Verlängerungsstegen 16 und 22 ragen. Jedes Scharnierteil 31 ist mit einem Gegenscharnierteil 36 gemäß Fig. 3 und 4 verbunden, das zwei Lageraugen 39 und 39' mit den Bohrungen 40 und 40' für den Scharnierstift aufweist. Das Gegenscharnierteil 30 ist mit einem Befestigungsblock versehen, der über die Zwischenstege 38 und 38' von den Lageraugen 39 und 39' abgesetzt ist und der zwei Gewindebohrungen 37 und 38' aufweist. Wie Fig. 1 zeigt, kann das Gegenscharnierteil 36 mittels zweier Schrauben 41 an der Schrankwand 44 festgelegt werden. Die Schrauben 41 werden durch Bohrungen 45 der Schrankwand 44 eingeführt und in die Gewindelöcher 37 und 37' des Gegenscharnierteiles 36 eingeschraubt. Der Schraubenkopf 42 mit der Beilegscheibe 43 bildet dabei den Befestigungsanschlag. Fig. 1 zeigt den so angelenkten Profilrahmen in der Schließstellung, wobei die Lippe 52 der Dichtungslippe 51 den Profilrahmen direkt gegen die Schrankwand 44 abdichtet. Wie der Kreisbogen am Ende des Verlängerungssteges 16 andeutet, kann der Profilrahmen bis zum Anschlag des Verlängerungssteges 16 an dem Befestigungsblock des Gegenscharnierteiles 36 verschwenkt werden.

Bei dem Ausführungsbeispiel nach Fig. 2 ist das Rahmenprofil nicht so hoch und die Scharnierteile 31 sind mit Gegenscharnierteilen 47 verbunden, die fest mit einem abgewinkelten Schließsteg 45 im Bereich der Öffnung des Schrankes verbunden, z. B. verschweißt ist. Der Schließsteg 45 und das Gegenscharnierteil 47 sind im Übergangsbereich zu dem Scharnierteil 31 noch einmal abgewinkelt, wie die Teile 46 und 48 zeigen. Auch dieses Gegenscharnierteil 47 hat zwei Lageraugen in die der Scharnierstift eingeführt wird, wobei zwischen diesen beiden Lageraugen das Scharnierauge 33 des Scharnierteils 31 auf dem Scharnierstift geführt ist. Der abgewinkelte Endsteg 46 des Schließssteges 45 wird bei geschlossenem Profilrahmen, der ein Sichtfenster mit Glasscheibe bilden kann, durch den Dichtungsstreifen 50 abgedichtet, welcher in der Aufnahme 20 auf der Außenseite der Rückwand 14 festgelegt ist.

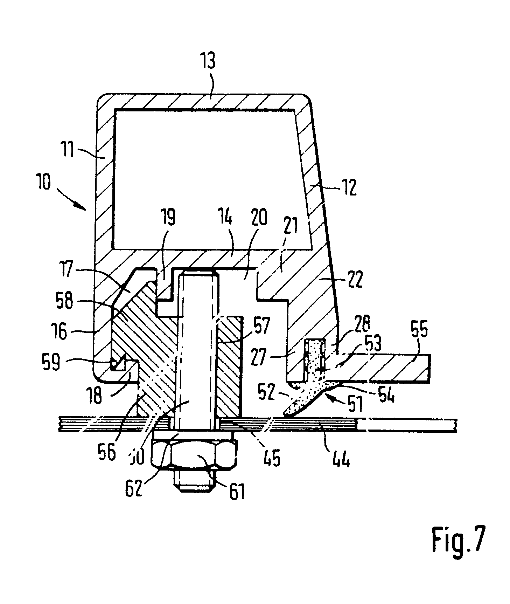

Das Rahmenprofil nach Fig. 7 kann zur Herstellung eines Profilrahmens mit zur Rückwand abgesetzter Trägerplatte verwendet werden. Dieser Profilrahmen kann fest mit einer Schrankwand verbunden werden, die vorzugsweise hinter der Trägerplatte eine Ausnehmung aufweist. Zur Befestigung sind Befestigungsblöcke 56 vorgesehen, die mit ihren Bereichen 58 und 59 etwas kleiner sind als die zugehörigen Bereiche der Aufnahmenut 17. Diese Bereiche 58 und 59 des Befestigungsblockes 56 sind so abgeschrägt, daß der Befestigungsblock 56 quer zur Längsachse in die Aufnahmenut 17 eingeführt und begrenzt in dieser Richtung darin verstellbar ist. Der Befestigungsblock 56 ist mit einer Gewindebohrung 57 versehen, in die eine Spannschraube 60 eingeschraubt ist. Mit dieser Spannschraube 60, die sich an der Außenseite der Rückwand 14, d. h. in der Aufnahme 20, abstützt, kann der Befestigungsblock 56 so in der Aufnahmenut 17 verstellt und verspannt werden, daß er axial unverschiebbar und unverlierbar in der Aufnahmenut 17 festgelegt ist. Ein Teil der Spannschraube 60, die als sogenannte Madenschraube ausgebildet sein kann, ragt an der der Rückwand 14 abgekehrten Seite aus dem Befestigungsblock 56 heraus. Mit diesem Teil der Spannschraube 60 kann der Profilrahmen an der Schrankwand 44 festgemacht werden. Die Spannschraube 60 ragt durch die Bohrung 45 der Schrankwand 44. Mit der Mutter 61 und der Unterlegscheibe 62 wird der Befestigungsblock 56 und darüber der Profilrahmen an der Schrankwand 4 festgezogen. Die Lippe 52 der in den Aufnahmeschlitz 23 eingeklemmten Dichtungslippe 51 dichtet dabei zur Schrankwand 44 hin ab.

Die Trägerplatte, auf der Bedienungsorgane oder dgl. befestigt sind, wird mit dem Befestigungssteg 55 verbunden, der an der Innenwand 12 angeformt ist. Dieser Befestigungssteg 55 verläuft parallel zur Rückwand 14 und schließt vorzugsweise bündig mit den Verlängerungsstegen 16 und 22 des Rahmenprofils ab. Die Aufnahmenut 24 in der Innenwand 12 für die Abschlußscheibe 30 kann bei dieser Verwendung des Rahmenprofils entfallen.

Es bleibt noch zu erwähnen, daß der Halt der Dichtungselemente in den Aufnahmenuten bzw. dem Aufnahmeschlitz des Rahmenprofils dadurch gewährleistet wird, daß die Aufnahmenut für die Abschlußscheibe, die Aufnahmenut für den Dichtungsstreifen und/oder der Aufnahmeschlitz für die Dichtungslippe mindestens einseitig einen Raststeg aufweist, der vorzugsweise als abgewinkelter Endsteg ausgebildet ist. Dieser Raststeg drückt sich in das Dichtungselement ein und bildet eine Art Widerhaken, der das Dichtungselement in der Aufnahmenut bzw. dem Aufnahmeschlitz festhält.

Wird auf dem Befestigungssteg der Innenwand eine Trägerplatte für Bedienungsorgane oder dgl. befestigt, dann kann auch hier ein dichter Abschluß erreicht werden, wenn vorgesehen wird, daß der Befestigungssteg der Vorderwand zugekehrt mit einer Aufnahmenut für ein Dichtungselement versehen ist.

Damit im Bereich der Innenwand nicht über eine Dichtungslippe sondern auch mittels eines breiteren Dichtungsstreifens gegen einen an der Vorderwand des Schrankes abstehenden Schließsteg abgedichtet werden kann, wird das erfindungsgemäße Rahmenprofil im Übergangsbereich zwischen Innenwand und Rückwand so ausgebildet, daß die Rückwand vor dem Übergang in die Innenwand in Richtung der Vorderwand abgesetzt ist und daß die Innenwand im Bereich dieses Absatzes vorgezogen und rechtwinklig abgebogen eine Aufnahmenut für einen Dichtungsstreifen bildet.

## Patentansprüche

1. Rahmenprofil für Fenster- und Türrahmen bzw. für aufsetzbare Bedienungsfelder oder dgl. für Schalt- oder Verteilerschränke und dgl., bei dem ein Hohlprofilteil (10) durch eine Außenwand (11), eine Innenwand (12), eine Vorderwand (13) und eine Rückwand (14) gebildet ist, dadurch gekennzeichnet, daß die Vorderwand (13) und die Rückwand (14) senkrecht zur Außenwand (11) stehen, während die Innenwand (12) leicht geneigt ist, so daß sich der Hohlprofilteil (10) zur Vorderwand (13) hin verjüngt, daß die Außenwand (11) über die Rückwand (14) hinaus verlängert ist, wobei in diesem Verlängerungssteg (16) auf der Innenseite eine hinterschnittene Aufnahmenut (17) für Scharnierteile (31) oder Befestigungsblöcke (58) ausgebildet ist, daß die Rückwand (14) auf ihrer Außenseite als Aufnahmenut (20) für einen Dichtungsstreifen (50) ausgelegt ist, daß die Innenwand (12) über die Rückwand (14) hinaus verlängert ist, wobei der Verlängerungssteg (22) stirnseitig einen Aufnahmeschlitz (23) für eine Dichtungslippe (51) aufweist und daß bei einem Rahmenprofil für Fenster- und Türrahmen die Innenwand (12) im Anschluß an die Vorderwand (13) eine eingelassene Aufnahmenut (24) für eine Abschlußscheibe (30) aufweist, bzw. bei einem Rahmenprofil für aufsetzbare Bedienungsfelder auf der Außenseite des Verlängerungssteges (22) der Innenwand (12) ein Befestigungssteg (55) angeformt ist, der parallel zur Vorder- und Rückwand (13 und 14) ausgerichtet ist.

2. Rahmenprofil nach Anspruch 1, dadurch gekennzeichnet, daß die hinterschnittene Aufnahmenut (17) auf der Innenseite des Verlängerungssteges (16) der Außenwand (11) durch eine L-förmige Endabwinkelung (18) des Verlängerungssteges (16) und einen zur Außenseite der Rückwand (14) senkrecht stehenden, im Abstand zum Verlängerungssteg (16) angeordneten Haltesteg (19) gebildet ist.

3. Rahmenprofil nach Anspruch 2, dadurch gekennzeichnet, daß dieser Haltesteg (19) einseitig die Aufnahmenut (20) für den Dichtungssteifen (50) begrenzt und daß die andere Seite der Aufnahmenut (20) durch einen verdickten Endbereich (21) der Rückwand (14), der in die Innenwand (12) übergeht, gebildet ist.

4. Rahmenprofil nach Anspruch 1, dadurch gekennzeichnet, daß die Aufnahmenut (24) für die Abschlußscheibe (30) durch einen Teil der Vorderwand (13), einen parallel zur Außenwand (11) verlaufenden Nutsteg (25) und einen parallel zur Vorderwand (13) verlaufenden Nutsteg (26) gebildet ist, wobei der letztgenannte Nutzsteg (26) in die Innenwand (12) übergeht.

5. Rahmenprofil nach einem der Ansprüche 1 bis 4, dadurch gekennzeichnet, daß die Abschlußscheibe (30) über ein im Querschnitt U-förmiges Dichtungsprofil (29) in der Aufnahmenut (24) der Innenwand (12) festgelegt ist.

6. Rahmenprofil nach einem der Ansprüche 1 bis 5, dadurch gekennzeichnet, daß der Verlängerungssteg (22) der Innenwand (12) durch den Aufnahmeschlitz (23) für die Dichtungslippe (51), der senkrecht zur Rückwand (14) gerichtet ist, in zwei Haltestege (27, 28) unterteilt ist, zwischen denen der Raststeg (53) der Dichtungslippe (51) festklemmbar ist.

7. Rahmenprofil nach Anspruch 1, dadurch gekennzeichnet, daß der Befestigungssteg (55) bündig mit dem Verlängerungssteg (22) der Innenwand (12) abschließt.

8. Rahmenprofil nach einem der Ansprüche 1 bis 7, dadurch gekennzeichnet, daß die Verlängerungsstege (16 und 22) der Außen- und der Innenwand (11 und 12) in der zur Rückwand (14) parallelen Ebene enden.

9. Rahmenprofil nach einem der Ansprüche 1 bis 8, dadurch gekennzeichnet, daß die Kante zwischen der Vorderwand (13) und der Außenwand (11), die Kante zwischen der Vorderwand (13) und der Innenwand (12) und die Kante zwischen dem Verlängerungssteg (16) der Außenwand (11) und der L-förmigen Endabwinkelung (18) des Verlängerungssteges (16) abgerundet sind.

10. Rahmenprofil nach einem der Ansprüche 1 bis 9, dadurch gekennzeichnet, daß in der Aufnahmenut (17) des Verlängerungssteges (16) der Außenwand (11) als Gleitsteine ausgebildete Scharnierteile (31) axial verstellbar, jedoch unverdrehbar geführt sind, die im Querschnitt an den Querschnitt der Aufnahmenut (17) angepaßt sind und an denen ein Scharnierauge (33) mit einer Bohrung (34) für einen Scharnierstift angeformt ist.

11. Rahmenprofil nach Anspruch 10, dadurch gekennzeichnet, daß die Scharnieraugen (33) in den Bereich zwischen den beiden Verlängerungsstegen (16 und 22) der Außen- und der Innenwand (11 und 12) ragen und vorzugsweise außerhalb der Aufnahme (20) für den Dichtungsstreifen (50) angeordnet sind.

12. Rahmenprofil nach Anspruch 10 oder 11, dadurch gekennzeichnet, daß die Scharnierteile (33) mit Gegenscharnierteilen (36 bzw. 47) verbindbar sind, die mit der Schrankwand (44) bzw. einem abgewinkelten Schließsteg (45) im Bereich der Schranköffnung angebracht sind.

13. Rahmenprofil nach einem der Ansprüche 1 bis 9, dadurch gekennzeichnet,

daß in die Aufnahmenut (17) des Verlängerungssteges (16) der Außenwand (11) Befestigungsblöcke (56) quer zur Längsrichtung einfahrbar sind,

daß diese Befestigungsblöcke (56) begrenzt quer zur Aufnahmenut (17) verstellbar sind und daß die Befestigungsblöcke (56) mittels Spannschrauben (60), die in eine Gewindebohrung (57) derselben einschraubbar und gegen die Außenseite der Rückwand (14) verspannbar sind, unverlierbar und unverschiebbar in der Aufnahmenut (17) festlegbar sind.

14. Rahmenprofil nach Anspruch 13, dadurch gekennzeichnet, daß die Spannschrauben (60) auf der der Rückwand (14) abgekehrten Seite an den Befestigungsblöcken (56) vorstehen und mit diesen vorstehenden Teilen und Muttern (61) an der Schrankwand (44) festlegbar sind.

15. Rahmenprofil nach einem der Ansprüche 1 bis 14, dadurch gekennzeichnet, daß die Aufnahmenut (24) für die Abschlußscheibe (30), die Aufnahmenut (20) für den Dichtungsstreifen (50) und/oder der Aufnahmeschlitz (23) für die Dichtungslippe (51) mindestens einseitig einen Raststeg aufweist, der vorzugsweise als abgewinkelter Endsteg ausgebildet ist.

16. Rahmenprofil nach einem der Ansprüche 1 bis 15, dadurch gekennzeichnet, daß der Befestigungssteg (55) der Vorderwand (13) zugekehrt mit einer Aufnahmenut für ein Dichtungselement versehen ist.

17. Rahmenprofil nach Anspruch 1, dadurch gekennzeichnet, daß die Rückwand (14) vor dem Übergang in die Innenwand (12) in Richtung der Vorderwand (13) abgesetzt ist und

daß die Innenwand (12) im Bereich dieses Absatzes vorgezogen und rechtwinklig abgebogen eine Aufnahmenut für einen Dichtungsstreifen bildet.

## Claims

1. Frame section assembly for window and door frames of for attachable operator control panels or the linke for switch or distributing switchboard cabinets and the like, wherein a hollow section (10) is formed by an outside wall (11), an inside wall (12), a front wall (13) and a rearside wall (14), characterized in

that said front wall (13) and said rearside wall (14) are positioned vertically in relation to said outside wall (11) while said inside wall (12) is slightly inclined so that said hollow section is tapered toward said front wall (13),

that said outside wall (11) is extended beyond said rearside wall (14), with an undercut receiving groove (17) for taking up hinge members (31) or mounting blocks (58) being formes in this extension web (16) on the inside, that said rearside wall (14) is designed on its outside to have the shape of a receiving groove (20) for taking up a packing (sealing) strip (50), that said inside wall (12) is extended beyond said rearside wall (14), with the resulting extension web (22) being provided on its face with a receiving groove (23) for taking up a sealing lip (51), and

that in the case of a frame section assernbly for window and door frames said inside wall (12) following said front wall (13), is provided with a let-in receiving groove (24) for taking up an end plate (30), or that in the case of a frame section assembly for attachable operator control panels there is moulded to the outside of said extension web (22) of said inside wall (12) a mounting web (55) which is in a parallel alignment with said front and rearside wall (13 and 14).

2. A frame section assembly as claimed in claim 1, caracterized in, that said undercut receiving groove (17) on the inside of said extension web (16) of said outside wall (11) is formed by an L-shaped end angle (18) of said extension web (16) and by a holding web (19) positioned vertically in relation to the outside of said rearside wall (14) and arranged at a spacing from said extension web (16).

3. A frame section assembly as claimed in claim 2, characterized in

that said holding web (19) restricts on one side the said receiving groove (20) which is intended to take up said packing (sealing) strip (50) and that the other side of said receiving groove (20) is formed by a somewhat thicker end pat (21) of said rearside wall (14), which extends into said inside wall (12).

4. A frame section assembly as claimed in claim 1, characterized in that said receiving groove (24) which is intended to take up said end plate (30), is formed by a part of said front wall (13), by a groove-forming web (25) extending parallel in relation to said outside wall (11), and by a groove-forming web (26) extending parallel in relation to said front wall (13), with said last-mentioned groove-forming web (26) extending into said inside wall (12).

5. A frame section assembly as claimed in any one of claims 1 to 4, characterized in that said end plate (30) is secured in said receiving groove (24) of said inside wall (12) by a sealing profile (29) of U-Shaped cross-section.

6. A frame section assembly as claimed in any one of claims 1 to 5, characterized in that said extension web (22) of said inside wall (12), by said receiving slot (23) which serves to take up said sealing lip (51) and extends vertically in relation to said rearside wall (14), is divided into two holding webs (27, 28) between which the arresting web (53) of said sealing lip (51) is capable of being clamped.

7. A frame section assembly as claimed in claim 1, characterized in that mounting web (55) terminates flush with said extension web (22) of said inside wall (12).

8. A frame section assembly as claimed in any one of claims 1 to 7, characterized in that said extension webs (16 and 22) of both said outside and said inside wall (11 and 12) end up in a plane extending parallel in relation to said rearside wall (14).

9. A frame section assembly as claimed in any one of claims 1 to 8, characterized in that the edge between said front wall (13) and said outside wall (11), as well as the edge between said front wall (13) and said inside wall (12), and the edge between said extension web (16) of said outside wall (1) and said L-shaped end angle (18) of said extension web (16) are all rounded off.

10. A frame section assembly as claimed in any one of claims 1 to 9, characterized in that in said receiving groove (17) of said extension web (16) of said outside wall (11) axially adjustable, but torsion-proof hinge members (31) designed as sliding blocks are guided and which, in their cross-sections, are adapted to the cross-section of said receiving groove (17), and to which a hinge eye (ring) (33) with a bore (34) for taking up a hinge pin is moulded.

11. A frame section assembly as claimed in claim 10, characterized in that said hinge eyes (33) extend into the area between said two extension webs (16 and 22) of said outside and said inside wall (11 and 12) and are arranged preferably outside said receptacle (20) which is intended to take up said sealing strip (50).

12. A frame section assembly as claimed in claims 10 or 11, characterized in that said hinge members (33) are capable of being connected to mating hinge members (36 or 47) which are attached together with the cabinet wall (44) or an angled-off locking web (45) within the cabinet's opening range.

13. A frame section assemble as claimed in any one of claims 1 to 9, characterized in
that mounting blocks (56) are capable of being moved into said receiving groove (17) of said extension web (16) of said outside wall (11) transversely in relation to the longitudinal direction,
that said mounting blocks (56) are adjustable to a limited extent transversely in relation to said receiving groove (17), and
that said mounting blocks (56) are capable of being sesured in position, undetachably and undisplaceably in said receiving groove (17) with the aid of tightening screws (60) which are capable of being screwed into a taphole (57) thereof and of being chuckable against the outside of said rearside wall (14).

14. A frame section assembly as claimed in claim 3, characterized in that said tightening screws (60) project from said mounting blocks (56) on the side not facing said rearside wall (14) and, with the aid of these projecting parts und nuts (61), are capable of being secured to said cabinet wall (44).

15. A frame section assembly as claimed in any one of claims 1 to 14, characterized in that said receiving groove (24) for said end plate (30), said receiving groove (20) for said sealing strip (50), and/or said receiving slat (23) for said sealing lip (51) is/are provided at least on one side with an engaging web which is perferably designed to have the shape of an angled off end web.

16. A frame section assembly as claimed in any one of claims 1 to 15, characterized in that said mounting web (55), in facing said front wall (13), is provided with a receiving groove for taking up a sealing element.

17. A frame section assembly as claimed in claim 1, characterized in
that said rearside wall (14), ahead of its transistion into said inside wall (12), is offset in direction toward said front wall (13), and
that the interior wall is extended forwardly within the area of this offset portion and, by being bent of rectangularly, forms a receiving groove for taking up a sealing strip.

**Revendications**

1. Profilé d'encadrement pour châssis de fenêtres et de portes ou pour panneaux de service démontables ou organes analogues d'armoires de connexion ou de distribution, ou élélments analogues, dans lequel un profilé dreux (10) est délimité par une paroi extern (11), une paroi interne (12), une paroi antérieure (13) et une paroi postérieure (14), profilé caractérisé
par le fait que sa paroi antérieure (13) et sa paroi postérieure (14) sont à sa paroi externe (11), cependant que sa paroi interne (12) est légèrement inclinée, de sorte que ledit profilé creux (10) est de section décroissante en direction de sa paroi entérieure (13);
par le fait que la paroi externe (11) est prolongée au-delà de la paroi postérieure (14), auquel cas, dans la face interne de la branche de prolongement (16) ainsi formée, est ménagée une cavité détalonnée (17) logeant des charnières (31) ou des blocs de fixation (58);
par le fait que la face externe de la paroi postérieure (14) présente un évidement (20) destiné à loger une bande d'étanchéité (50);
par le fait que la paroi interne (12) est prolongée au-delá de la paroi postérieure (14), la branche de prolongement (22) ainsi formée comportant dans sa face extrême une gorge (23) logeant une lèvre d'étanchéité (51);
et par le fait que, lorsque le profilé est utilisé pour encadrer des châssis de fenêtres et des portes, so paroi interne (12) comporte dans sa région de raccordement à la paroi antérieure (13) un logement (24) d'un disque de fermeture (30) et, lorsque ledit profilé sert à encadrer des panneaux de service démontables, une nervure de fixation (55), parallèle aux parois antérieure (13) et postérieure (14), est solidaire de la face externe de la branche de prolongement (22) de ladite paroi interne (12).

2. Profilé selon la revendication 1, caractérisé par le fait que la cavitté détalonnée (17) ménagée dans la face interne de la branche de prolongement (16) de la paroi externe (N) est délimitée par un coin (18) rabattu en L de ladite branche (16) et par une branche de retenue (19) perpendiculaire à la face externe de la paroi postérieure (14) et disposée à distance de ladite branche de prolongement (16).

3. Profilé selon la revendications 2, caractérisé par le fait que la branche de retenue (19) délimite d'un côte l'évidement (20) logeant la bande d'étanchéité (50), l'autre face de cet évidement (20) étant délimitée par une région extrême épaisse (21) de la paroi postérieure (14), raccordée à la paroi interne (12).

4. Profilé selon la revendication 1, caractérisé par le fait que le logement (24) du disque de fermeture (30) est délimité par une partie de la paroi antérieure (13), par une branche (25) parallèle à la paroi externe (11) et par une branche (26) parallèle à la paroi antérieure (13), ladite branche (26) étant raccordée à la paroi interne (12).

5. Profilé selon l'un quelconque des revendications 1 à 4, caractérisé par le fait que, dans le logement (24) solidaire de la paroi interne (12), le disque de fermeture (30) est monté dans une garniture d'étanchéité (29) de section en U.

6. Profilé selon l'une quelconque des revendications 1 à 5, caractérisé par le fait que la branche de prolongement (22) de la paroi interne (12) est subdivisée par la gorge (23) recevant la lèvre d'étanchéité (51) et perpendiculaire à la paroi postérieure (14), en deux branches de retenue (27, 28) entre lesquelles peut être coincée l'âme emboîtable (53) de ladite lèvre d'étanchéité (51).

7. Profilé selon la revendication 1, caractérisé par le fait que la nervure de fixation (55) vient à fleur de la branche de prolongement (22) de la paroi interne (12).

8. Profilé selon l'une quelconque des revendications 1 à 7, caractérisé par le fait que les branches de prolongement (16, 22) des paroi externe (11) et interne (12) se terminent dans un plan parallèle à la paroi postérieure (14).

9. Profilé selon l'une quelconque des revendications 1 à 8, caractérisé par le fait que l'arête entre la paroi antérieure (13) et la paroi externe (11), l'arête entre ladite paroi antérieure (13) et la paroi interne (12), ainsi que l'arête entre la branche de prolongement (16) de ladite paroi externe (11) et le coin (18) rabattu en L de ladite branche (16) sont arrondies.

10. Profilé selon l'une quelconque des revendications 1 à 9, caractérisé par le fait que, dans la cavité (17) de la branche de prolongement (16) de la paroi externe (11), sont mobiles axialement, sans toutefois pouvoir tourner, des gonds (31) de charnières qui, conformés en patins, ont une section adaptée à la section de ladite cavité (17) et présentent un œillet solidaire (33) percé d'un trou (34) laissant passer une broche de charnière.

11. Profilé selon la revendication 10, caractérisé par le fait que les œillets (33) font saillie dans la région comprise entre les deux branches de prolongement (16, 22) des parois externe (11) et enterne (12) et sont disposés de préférence à l'extérieure de l'évidement (20) logeant la bande d'étanchéité (50).

12. Profilé selon l'une des revendications 10 et 11, caractérisé par le fait que les gonds (31) peuvent être reliès à des gonds complémentaires (36, 47) solidaires de la paroi (44) de l'armoire ou d'une branche coudée de fermeture (45') à proximité de l'ouverture de ladite armoire.

13. Profilé selon l'une quelconque des revendications 1 à 9, caractérisé par le fait que, dans la cavité (17) de la branche de prolongement (16) de la paroi externe (11) des blocs de fixation (56) peuvent être introduits perpendiculairement à l'axe longitudinal, ces blocs (56) pouvant effectuer des déplacements perpendiculaires à ladite cavité (17), et par le fait que lesdits blocs de fixation (56) peuvent être fixés de manière imperdable et immobile dans ladite cavité (17), au moyen de vis de serrage (60) pouvant être vissées un taraudage (57) desdits blocs et serrées contre la face externe de la paroi postérieure (14).

14. Profilé selon la revendications 13, caractérisé par le fait que les vis de serrage (60) font saillie au delà des blocs de fixation (56), sur la face opposée à la paroi postérieure (14), et peuvent être fixées par ces parties saillantes et au moyen d'écrous (61) contre la paroi (44) de l'armoire.

15. Profilé selon l'une quelconque des revendications 1 à 14, caractérisé par le fait que le logement (24) du disque de fermeture (30), l'évidement (20) logeant la bande d'étanchéité (50) et éventuellement ou en variante la gorge (23) recevant la lèvre d'étanchéité (51) présentent au moins d'un côté une âme emboîtable conformée, de préférence, en région extrême coudée.

16. Profilé selon l'une quelconque des revendications 1 à 15, caractérisé par le fait que la nervure de fixation (55) orientée vers la paroi antérieure (13) comporte une gorge logeant une garniture d'étanchéité.

17. Profilé selon la revendication 1, caractérisé par le fait que sa paroi postérieure (14) est décalée en direction de sa paroi antérieure (13) avant de se raccorder à sa paroi interne (12), et par le fait que ladite paroi interne (12) est coudée à angle droit dans cette région décalée, pour former un èvidement logeant une bande d'étanchéité.

Fig.1

Fig.2

Fig.3

Fig.4

Fig.5

Fig.6

Fig.7